# EUROPEAN PATENT SPECIFICATION

(11) **EP 3 460 377 B1**
(45) Date of publication and mention of the grant of the patent: **29.04.2020**
(21) Application number: 17275147.1
(22) Date of filing: 21.09.2017
(51) Int. Cl.: F28F 9/00, F28D 7/00

(54) **HEAT EXCHANGER FRAME**
WÄRMETAUSCHERRAHMEN
CADRE D'ÉCHANGEUR DE CHALEUR

(43) Date of publication of application: 27.03.2019
(73) Proprietor: HS Marston Aerospace Limited, Wolverhampton WV10 6QJ (GB)
(72) Inventor: POLLARD, Berwyn, Wolverhampton, West Midlands WV4 4PB (GB); WILKES, James, Broseley, Shropshire TF12 5HJ (GB)
(74) Representative: Dehns

(56) References cited:
- WO-A1-2017/139303
- DE-A1-102009 055 715
- US-A1- 2014 224 458
- US-A1- 2016 377 348

## Description

The present specification relates to an external frame for a heat exchanger and a heat exchanger including the external frame, along with related methods of manufacture.

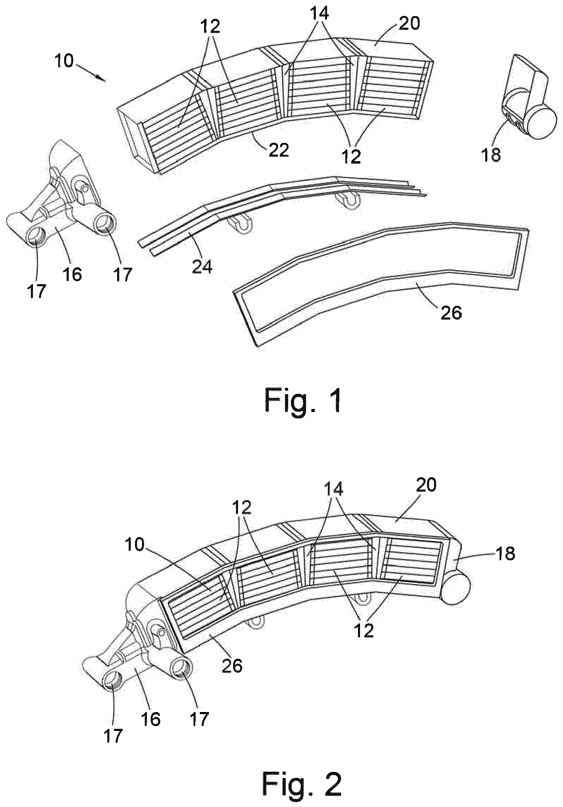

In various heat exchanger applications, such as gas turbine engines used in aerospace applications, it is desirable to optimise the use of any available space, particularly where efficiency, volume reduction and weight reduction are primary considerations. It is often required for a heat exchanger to be designed to fill a relatively small space, which places constrains on the form of the heat exchanger core and on ancillary parts needed around the heat exchanger core. In many cases, such as in an air-intake of an aircraft, the space available for a heat exchanger is curved. This requires adaptation to the design of the heat exchanger core so that it fits within the available curved space. To address this need, curved heat exchangers have been developed as shown in Figures 1 and 2.

As can be seen in those Figures, the curved heat exchanger includes a heat exchanger core 10 which is formed of several heat exchanger segments 12 joined together to form a curved shape. The curved shape is achieved by joining several cuboid segments 12 with wedge sections 14 so that the cuboid segments 12 extend through part of an arc of a circle. This allows for the heat exchanger to fit within the available space whilst also using relatively conventional technology to form each segment 12 of the heat exchanger core 10. For example, a plate fin or a pin fin arrangement may be used for the segments 12 of the core 10. Within each segment 12 a first fluid flows along the length of the exchanger core 10, i.e. along each segment 12 in sequence, and a second fluid flows across the width of the exchanger core 10, i.e. across each segment 12 in parallel. The first fluid may for example be a liquid used to remove or add heat to the second fluid, which may be a gas such as engine air or exhaust from an engine. The wedge sections 14 that join the cuboid segments 12 together can be wedge shaped fluid guide pieces for passing fluid between the segments, typically provided with appropriate flow guide features, enclosure bars, and/or separator plates so that the first fluid flows as required between the adjacent segments 12 and the second fluid flows only across the width of the heat exchanger core 10 and in general does not enter the wedge sections 14.

Along with the need to adapt the core design of heat exchangers in relation to space constraints then it is also required to adapt the connections to the heat exchanger and ancillary structures such as plumbing, tanks (plenums), gallery and so on to fit closely round the heat exchanger core and to conform to restrictions on the size and shape of the space available in the engine. An example of the connections to the heat exchanger in the case of a curved shape heat exchanger are shown in Figures 1 and 2. At a first end of the heat exchanger core 10 a ported tank 16 is brazed or welded to the end most segment 12. The ported tank 16 includes inlet and outlet ports 17 for the first fluid. At the opposite end of the heat exchanger core 10 is an end tank 18, which in this example also includes a valve housing as shown. In this case, the heat exchanger core is arranged such that the first fluid enters via an inlet 17 of the ported tank 16, flows along a first section of the heat exchanger core 10, for example a lower half of the core 10, and then enters the end tank 18 where the flow is turned to return along a second section of the heat exchanger core 10, for example an upper half of the core 10, and back to the ported tank 16 where it can exit via an outlet 17 at the ported tank 16.

In addition to the two tanks 16, 18, the heat exchanger core 10 is also enclosed along its upper and lower surfaces by an upper enclosure 20 and a lower enclosure 22. These serve to complete sealing of the flow paths for the first fluid along the upper and lower surfaces of the heat exchanger core 10 and in particular at the points where the segments 12 join with the wedge sections 14. In order to fit closely with the shape of the heat exchanger core 10, upper enclosure 20 and the lower enclosure 22 are formed from multiple plates which are each individually brazed or welded to the heat exchanger core 10. In relation to the flow path for the second fluid across the segments 12 of the heat exchanger core 10 a mounting structure 26 is provided for mounting to other parts, such as an interface with the engine, so that flow of the second fluid can be guided into the heat exchanger core 10 and through each of the segments 12. The final element required to complete the structure of the heat exchanger is a gallery 24 which is fitted to the base of the heat exchanger and allows for diversion of flow between the ported tank 16 and the end tank 18, for example when it is desired to circulate the first fluid without flow through heat exchanger core 10 and/or when there is a blockage preventing flow through the heat exchanger core 10. As with the upper enclosure 20 and the lower enclosure 22, it is important that the gallery 24 is fitted closely to the shape of the heat exchanger core 10 and also that it is fitted with a sealed joint. In order to allow for this then the gallery 24 is made of multiple segments corresponding to the number of heat exchanger segments 12 and each of the segments of the gallery 24 is welded to the lower enclosure 22 and to the adjacent segments of the gallery 24 in order to form a flow path which runs along the entire length of the heat exchanger core and is sealed via welding at all points along its length.

Figure 2 shows the parts of Figure 1 assembled together to form the heat exchanger that is ready to be mounted at its point of use. It will be appreciated that the assembly of the core sections 12 into a curved shape along with the welding and/or brazed connection of the tanks 16, 18, the upper enclosure 20, the lower enclosure 22, the gallery 24 and the mounting structure 26 results in a compact arrangement that can be designed to fit with a specific shape and size corresponding to the available space, which in this example is a curved region around an engine such as a gas turbine engine.

US 2016/377348 discloses an external frame for a heat exchanger according to the preamble of claim 1 and describes a cuboid frame for a heat exchanger. The frame is formed of a rectangular body and a pair of side plates closing openings at either end of the body. Two chambers are formed at one end of the body, and are fluidly coupled by a bypass flow path.

WO 2017/139303 discloses a housing for a heat exchanger that is formed of multiple sections joined together to define an air flowpath.

Viewed from a first aspect, the invention provides an external frame for a heat exchanger, the external frame being for holding a heat exchanger core; the external frame including: inlet and outlet couplings for connection to a first fluid circuit for supply and return of a first fluid to the heat exchanger core; a first tank for fluid communication with a first end of the heat exchanger core; a second tank for fluid communication with a second end of the heat exchanger core; and a gallery extending along the external frame between the first tank and the second tank providing fluid communication between the first tank and the second tank; wherein the external frame is arranged to be sealed to the heat exchanger core so that the first fluid flows from the inlet, through the heat exchanger core and the tanks, and to the outlet; characterised in that the external frame is a single integrated structure; the first tank is at a first end of the external frame; the second tank is at a second end of the external frame; and the external frame has a curved shape and is arranged to hold a curved heat exchanger core.

With this arrangement multiple separate parts in the prior art construction are provided in a single integrated external frame. Thus, a single integrated part includes the two tanks (or plenums) at the ends of the heat exchanger core along with the gallery that joins the two tanks along the length of the external frame and hence along the length of heat exchanger core as well as being arranged to hold the heat exchanger core. This means that the extensive welding and brazing operations previously required to join the tanks to the core and to fabricate the gallery and join it to the core can be avoided. This simplifies manufacture as well as also reducing the risk of inducing deformation and defects in the core due to the subsequent heating from welding and brazing. The heat exchanger core can simply be slotted into the external frame with the required seals being completed in order to form an assembly of the core, tanks, gallery, and frame in a single operation.

The heat exchanger core may be one that is joined to the first fluid circuit for the first fluid to pass along a length of the core via the external frame and that is joined to a second fluid circuit for flow of a second fluid across a width of the core. Whilst length and width are used herein with reference to a typical configuration of heat exchanger core in which the flow path for the first fluid would have a longer dimension than the flow path for the second fluid, it should be appreciated that the flow path for the first fluid may also have a shorter dimension than the flow path for the second fluid, with the external frame adapted accordingly.

The external frame may provide a supporting structure for holding the heat exchanger core. Thus, the external frame may serve as a supporting structure. The external frame may be arranged to encircle the heat exchanger core, for example by enclosing the ends and two other sides of the heat exchanger core. In one example an upper enclosure and/or a lower enclosure for the heat exchanger core are formed integrally with the external frame along with the other parts of the external frame. In that case various further fabrication and welding operations are avoided since it is no longer necessary to join multiple plates together to form the upper enclosure and/or the lower enclosure. Advantageously, both of the upper enclosure and the lower enclosure are formed integrally with the external frame. Thus, the external frame may be arranged to encircle an upper surface of the heat exchanger core, a lower surface of the heat exchanger core and two ends of the heat exchanger core where the first and second tanks are situated, with open sides in the external frame allowing for passage of a second fluid through the heat exchanger core. In the case where the lower enclosure is formed integrally with the external frame then the gallery can be integrated with the lower enclosure along the external frame in alignment with the flow direction for the first fluid and hence along the heat exchanger core in alignment with the flow direction for the first fluid.

The external frame may include a mounting structure for joining the external frame to a flow path for the second fluid, for example for interfacing with an engine or for coupling to a manifold or tank which supplies the second fluid. The mounting structure may be formed about an open side of the external frame with an opening at a central part of the mounting structure to allow for flow of the second fluid through the opening.

The external frame may include all parts required to complete the heat exchanger structure once the heat exchanger core has been inserted. Thus, it may not be necessary to add any further structural parts to the external frame. The heat exchanger may be fully completed simply by insertion of the heat exchanger core into the external frame, or in some cases the external frame may be provided with appropriate housings or mounting points for additional components such as valves and/or sensors.

It will be appreciated that the use of the external frame, in which various parts that are used to connect the external frame to the heat exchanger core are integrated, provides advantages in reducing welding or brazing steps even if welding or brazing is then used to attach the exchanger core to the external frame. Thus, the external frame may be arranged such that the heat exchanger core may be coupled to the external frame by welding or by brazing. However, it is anticipated that further advantages will be realised if the use of welding and brazing can be further reduced, and therefore in example implementations the external frame is arranged such that the heat exchanger core may be coupled to the external frame via mechanical means, for example via mechanical fixings such as bolts. Mechanical fixings may be used in combination with welding or brazing, although in some examples mechanical fixings are used without any welding or brazing.

The external frame may include sealing surfaces for forming a seal with the heat exchanger core, when inserted, in order to seal fluid flow paths of the heat exchanger core. For example, there may be sealing surfaces about inner surfaces of the periphery of one or both of the first tank and second tank for forming a seal about a periphery of the ends of the heat exchanger core. The upper enclosure and/or the lower enclosure may be arranged to form seals along the edges of respective upper and lower surfaces of the heat exchanger core and thus the external frame may have sealing surfaces along the edges of the upper enclosure and/or the lower enclosure.

The sealing surfaces may be arranged to form a seal in combination with sealing arrangements on the heat exchanger core, such as seals or gaskets formed on or connected to the heat exchanger core. In this way, a heat exchanger core used with the proposed external frame may be adapted compared to the prior art heat exchanger core by the addition of such sealing arrangements. Alternatively, or additionally, the sealing surfaces may be arranged to seal through the use of sealing media such as adhesives or other sealing compounds. In some cases adhesives may also be used for bonding the heat exchanger core to the external frame. The sealing surfaces may comprise flat surfaces within the external frame and may optionally be machined after a prior manufacturing step in order to ensure that they meet appropriate tolerances to provide a seal around the heat exchanger core.

The first tank and the second tank are arranged to guide the flow of the first fluid through the first fluid pathways in the heat exchanger core. Such tanks can also be referred to as plenums or manifolds, for example. The couplings for connection to the first fluid circuit may include an inlet and an outlet formed in one of the tanks or formed with an inlet in the first tank and an outlet in the second tank. In one example the first tank is a ported tank including both of the inlet and the outlet and the second tank is an end tank for reversing the flow of the first fluid between two passes through the heat exchanger core. It will of course be appreciated that the proposed external frame could also be adapted for use with a single-pass heat exchanger arrangement, or multiple pass arrangements, with appropriate modifications to the tanks and with the use of a suitable heat exchanger core.

The external frame is a single integrated structure including multiple ancillary parts for a heat exchanger as well as being for holding the heat exchanger core. The external frame may be a single integrated structure in that it is formed as a single part without additional assembly of multiple parts to form the single part. The external frame may be a single integrated structure in that it is formed from a single homogenous material in a single piece, for example by casting a single piece, by machining the external frame from a single blank, or by forming the external frame using additive manufacturing so as to create a single integrated part. Secondary machining steps may be used to finish the external frame, for example to bring sealing surfaces to a required tolerance and/or to finish couplings and valve housings for the fluid circuit. The external frame may be a single integrated structure in that it is formed by a shape created in a single manufacturing process, optionally with multiple materials. For example, it may use a shape formed by an additive manufacturing process using multiple materials in a single part, with this shape subsequently being machined to complete the external frame.

It will be appreciated that with a curved heat exchanger core then there can be a greater number of welding and/or brazing steps in the prior art in order to join multiple parts around a curved shape of the heat exchanger core as shown in Figures 1 and 2. Thus, there are more significant advantages for the proposed external frame when the resultant heat exchanger has a complex shape. Moreover, counter-intuitively, the advantages of the external frame can increase when the shape of the external frame becomes more complex even though the external frame is then potentially more difficult to design and manufacture, since these potential difficulties are outweighed by the advantages obtained by avoiding the risk of deformation and other defects in the heat exchanger core when multiple elements are welded together to form structures such as the upper enclosure, lower enclosure, and gallery as shown in Figure 1.

The external frame may include elements of the heat exchanger core, for example flow guide sections used to join segments of a multiple segment heat exchanger core. In the case of a curved external frame for a curved heat exchanger core formed of multiple segments, the external frame may include wedge sections for separating segments of the heat exchanger core, such that the final heat exchanger can be assembled by inserting individual segments into the external frame, with the wedge sections that are integrated with the external frame then completing the flow paths through the heat exchanger core. There may be particular advantages to the use of additive manufacturing with this arrangement since it would allow for relatively complex shapes, such as the wedge sections, to be formed integrally with the external frame.

Viewed from a second aspect, the invention provides a heat exchanger comprising an external frame as in the first aspect along with a heat exchanger core fitted within the external frame. In this case, the external frame may have any of the features discussed above, and the heat exchanger core may also have features as referred to above. The heat exchanger of this second aspect may comprise a heat exchanger core formed using brazing and/or welding, wherein the heat exchanger core is assembled with the external frame without any welding and/or brazing steps. Thus, the heat exchanger core may be assembled with the external frame using mechanical fixings, such as bolts. This may use mechanical sealing arrangements as discussed above, for example via sealing devices provided on the heat exchanger core and/or on the external frame, such as seals or gaskets.

It will be appreciated that the proposed external frame and the related heat exchanger are particularly beneficial in applications where there are significant constraints on the space available for the heat exchanger, such as in relation to a gas turbine engine. The invention thus may be embodied as a gas turbine engine including a heat exchanger as in the second aspect and/or an aircraft including a heat exchanger as in a second aspect, optionally including any of the other features set forth above.

Viewed from a further aspect, the invention provides a method of manufacture of the heat exchanger as described above, the method comprising: providing an external frame as described above; and inserting the heat exchanger core into the external frame. The heat exchanger core may be secured within the external frame by appropriate means, for example by mechanical fixings and/or by welding or brazing. The heat exchanger core may be sealed to the external frame using appropriate sealing surfaces.

Certain preferred embodiments will now be described by way of example only and with reference to the accompanying drawings, in which
Figure 1 is a perspective view of a prior art heat exchanger in exploded view;
Figure 2 shows the heat exchanger of Figure 1 when assembled;
Figure 3 shows a first perspective view of a heat exchanger core with an external frame in exploded view;
Figure 4 is second perspective view showing another side of the external frame and heat exchanger core of Figure 3;
Figure 5 shows a perspective view of the heat exchanger core of Figures 3 and 4 assembled with the external frame to form a heat exchanger; and
Figure 6 is second perspective view showing another side of the heat exchanger of Figure 5.

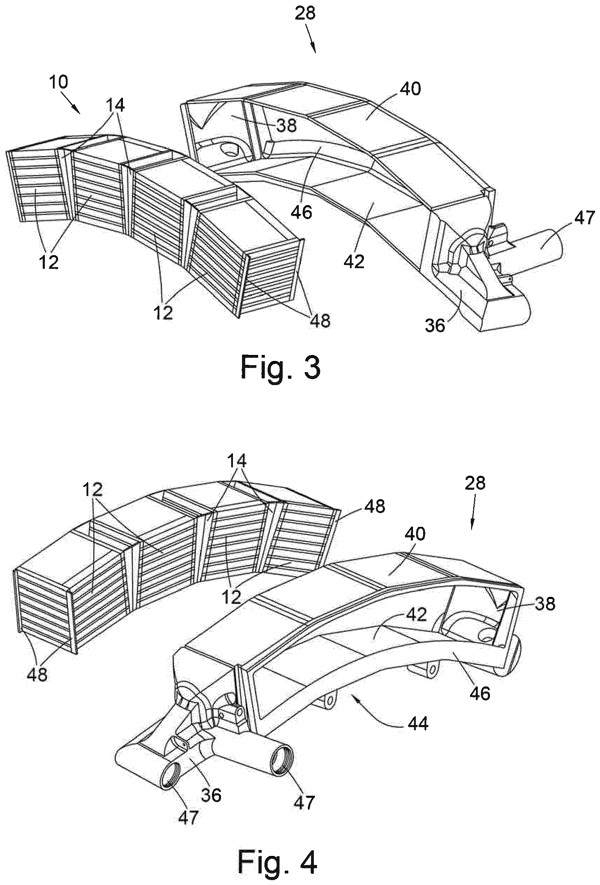

An example of a heat exchanger formed using an external frame to hold a heat exchanger core 10 is described below with reference to Figures 3 to 6. In this example the heat exchanger and hence the heat exchanger core 10 are curved and the heat exchanger is intended for use with a gas turbine engine. As with the prior art of Figures 1 and 2, the curved heat exchanger includes a heat exchanger core 10 which is formed of several heat exchanger segments 12 joined together to form a curved shape. This is fitted within an external frame 28, which is described in more detail below. The curved shape of the core 10 is achieved by joining several cuboid segments 12 with wedge sections 14 so that the cuboid segments 12 extend through part of an arc of a circle. This allows for the heat exchanger to fit within the available space whilst also using relatively conventional technology to form each segment 12 of the heat exchanger core 10. For example, a plate fin or a pin fin arrangement may be used for the segments 12 of the core 10. Within each segment 12, a first fluid flows along the length of the exchanger core 10, i.e. along each segment 12 in sequence, and a second fluid flows across the width of the exchanger core 10, i.e. across each segment 12 in parallel. The first fluid may for example be a liquid used to remove or add heat to the second fluid, which may be a gas such as engine air or exhaust from an engine. The wedge sections 14 that join the cuboid segments 12 together can be wedge shaped fluid guide pieces for passing fluid between the segments 12. Typically the wedge sections 14 are provided with appropriate flow guide features, enclosure bars, and/or separator plates so that the first fluid flows as required between the adjacent segments 12 and the second fluid flows only across the width of the heat exchanger core 10 and in general does not enter the wedge sections 14. The heat exchanger core 10 is adapted compared to that shown in Figures 1 and 2 by the addition of sealing flanges 48 for forming seals with sealing surfaces of the external frame 28.

The external frame 28 encircles the heat exchanger core 10, surrounding the two ends as well as upper and lower surfaces of the core 10. The frame is open along the exposed sides of the core 10 to allow for flow of the second fluid. The external frame 28 consists of first and second tanks 36, 38 at each end of the core 10, an upper enclosure 40 along the top of the core 10, a lower enclosure 42 along the bottom of the core 10, a gallery 44 (not visible in the Figures) integrated with the lower enclosure 42, and a mounting structure 46. The external frame 28 is a single integrated piece which provides all of the first and second tanks 36, 38, the upper enclosure 40, the lower enclosure 42, the gallery 44, and the mounting structure 46. It may be formed in a single piece by additive manufacturing, machining and/or casting. The external frame 28 is shaped and sized to receive the heat exchanger core 10 and to form a seal about the core 10, ideally using only mechanical fixings.

The external frame 28 serves to complete sealing of the flow paths for the first fluid along the upper and lower surfaces as well as the two ends of the heat exchanger core 10. In particular, the upper enclosure 40 and lower enclosure 42 provide sealing along the upper and lower surfaces of the heat exchanger core 10 respectively, for example at the points where the segments 12 join with the wedge sections 14. The upper enclosure 40 and the lower enclosure 42 are curved and in this case they are formed with a sequence of planar sections so that they correspond to the shape of the heat exchanger core 10 and fit closely with the shape of the heat exchanger core 10. This enables adequate sealing of the fluid paths for the first fluid whilst also restricting the overall size of the heat exchanger so that the external frame 28 does not unduly increase the size of heat exchanger. This is particularly important where the design of the heat exchanger is required to meet certain size and shape restrictions due to its intended use, for example when utilised with an engine such as a gas turbine engine.

The first tank 36 is positioned at a first end of the external frame 28 and forms a seal against the sealing flanges 48 of the end most segment 12. The first tank 36 includes inlet and outlet ports 47 for the first fluid. At the opposite end of the external frame 28 is the second tank 38 which similarly forms a seal against the sealing flanges 48 of the opposing end most segment 12. In this exemplary embodiment, the heat exchanger is arranged such that the first fluid enters via an inlet 47 of the first tank 36, flows along a first section of the heat exchanger core 10, for example a lower half of the core 10, and then enters the second tank 38 where the flow is turned to return along a second section of the heat exchanger core 10, for example an upper half of the core 10, and back to the first tank 36 where it can exit via an outlet 47 of the first tank 36. It will be appreciated that the flow can be in either direction and so the inlet and outlet ports 47 are in some ways interchangeable. Their location and the direction of flow can be adjusted based on the available space and any other restrictions on the plumbing to the heat exchanger. Alternatively, the external frame 28 may be adapted for use with a single-pass heat exchanger arrangement, or other multiple pass heat exchanger arrangements, with the first and second tanks 36, 38 being modified accordingly.

The gallery 44 is integrated with the lower enclosure 42, and allows for diversion of flow between the first tank 36 and the second tank 38, for example when it is desired to circulate the first fluid without flow through heat exchanger core 10 and/or when there is a blockage preventing flow through the heat exchanger core 10. Since the gallery 44 is integrated with the lower enclosure 42 it corresponds closely to the shape of the heat exchanger core 10 and fits closely to the core 10. The integrated gallery 44 forms a flow path which runs along the entire length of the heat exchanger core 10 between the first and second tanks 36, 38. As there is no need to form a weld bead along the length of the integrated gallery 44 as with the prior art gallery 24 shown in Figure 1 then the integrated gallery 44 can be formed with a much more consistent cross-section for the flow path within the integrated gallery 44, and problems from impingement of weld beads into the flow path are avoided.

In relation to the flow path for the second fluid across the segments 12 of the heat exchanger core 10, a mounting structure 46 is provided for mounting the external frame 28 to other parts, such as an interface with the engine, so that flow of the second fluid can be guided into the heat exchanger core 10 and through each of the segments 12. This flow path is otherwise similar to that of the prior art, since the structure of the heat exchanger core 10 that guides the second fluid is not changed compared to the prior art.

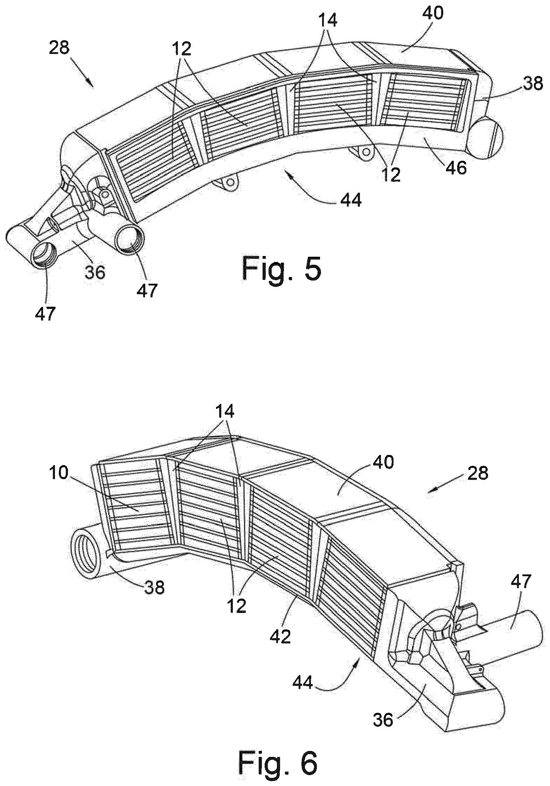

Figures 5 and 6 show the heat exchanger core 10 and external frame of Figures 2 and 4 assembled together to form the heat exchanger that is ready to be mounted at its point of use. It will be appreciated that the assembly of the core sections 12 into a curved shape along with the external frame 28 results in a compact arrangement that can be designed to fit with a specific shape and size corresponding to the available space, which in this example is a curved region around an engine such as a gas turbine engine.

In another embodiment, the external frame 28 may additionally include the wedge sections 14 for separating the segments 12 of the heat exchanger core 10. In this way, the wedge sections are formed integrally with the external frame such that the external frame is a single integrated piece which provides all of the first and second tanks 36, 38, the upper enclosure 40, the lower enclosure 42, the gallery 44, the mounting structure 46 and the wedge sections 14. The external frame 28 may be formed in a single piece by additive manufacturing, machining and/or casting.

The heat exchanger may be assembled by inserting individual segments 12 into the external frame. The wedge sections 14 of the external frame 28 can be wedge shaped fluid guide pieces and thus pass fluid between the individual segments 12 to complete the flow paths through the heat exchanger core 10. Typically, the wedge sections 14 are provided with appropriate flow guide features, enclosure bars, and/or separator plates so that the first fluid flows as required between the adjacent segments 12 and the second fluid flows only across the width of the heat exchanger core 10 and in general does not enter the wedge sections 14. The individual segments 12 may include sealing flanges 48 for sealing against the sealing surfaces of the external frame 28, for example the sealing surfaces of the first and second tanks 36, 38 and/or the wedge sections 14.

Advantageously, this embodiment allows for individual installation and/or replacement of the segments 12 of the heat exchanger core 10. For example, if a segment 12 were to become damaged or otherwise required replacing then it could be removed from the external frame 28 without having to remove the other segments 12 that form the heat exchanger core 10. Similarly, the replacement or repaired section 12 could be inserted in the external frame 28, forming a seal with the sealing surfaces of the external frame 28 to seal the fluid flowpaths of the heat exchanger core 10.

## Claims

1. An external frame for a heat exchanger, the external frame being for holding a heat exchanger core (10); the external frame including:
inlet and outlet couplings (47) for connection to a first fluid circuit for supply and return of a first fluid to the heat exchanger core (10);
a first tank (36) for fluid communication with a first end of the heat exchanger core;
a second tank (38) for fluid communication with a second end of the heat exchanger core; and
a gallery (44) extending along the external frame between the first tank and the second tank providing fluid communication between the first tank and the second tank;
wherein the external frame is arranged to be sealed to the heat exchanger core so that the first fluid flows from the inlet, through the heat exchanger core and the tanks, and to the outlet;
**characterised in that** the external frame is a single integrated structure;
the first tank is at a first end of the external frame;
the second tank is at a second end of the external frame; and
the external frame has a curved shape and is arranged to hold a curved heat exchanger core.

2. An external frame as claimed in claim 1 wherein the external frame is arranged to provide a supporting structure for holding the heat exchanger core (10) by encircling the heat exchanger core.

3. An external frame as claimed in claim 1 or 2 comprising an upper enclosure (40) formed integrally as a part of the external frame and being for providing sealing along an upper surface of the heat exchanger core (10) and/or a lower enclosure (42) formed integrally as a part of the external frame and being for providing sealing along a lower surface of the heat exchanger core (10).

4. An external frame as claimed in claim 3, comprising a lower enclosure (42) formed integrally as a part of the external frame and being for providing sealing along a lower surface of the heat exchanger core (10) and wherein the gallery (44) is integrated with the lower enclosure (42).

5. An external frame as claimed in any preceding claim, wherein the external frame includes sealing surfaces for forming a seal with the heat exchanger core (10) in order to seal fluid flow paths of the heat exchanger core.

6. An external frame as claimed in any preceding claim, wherein the external frame is arranged such that the heat exchanger core (10) can be coupled to the external frame via mechanical means

7. An external frame as claimed in any preceding claim, wherein the external frame includes all parts required to complete the structure of the heat exchanger once the heat exchanger core (10) has been inserted.

8. An external frame as claimed in any preceding claim, wherein the external frame is provided with appropriate housings or mounting points for heat exchanger components such as valves and/or sensors.

9. An external frame as claimed in any preceding claim, wherein the external frame is formed using additive manufacturing.

10. An external frame as claimed in any preceding claim, wherein the external frame includes flow guide sections for joining segments (12) of a multiple segment heat exchanger core (10) such that the heat exchanger can be assembled by inserting multiple such segments.

11. A heat exchanger comprising an external frame as claimed in any preceding claim and a heat exchanger core (10) fitted within the external frame, wherein the heat exchanger is a curved heat exchanger for an air-intake of an aircraft.

12. A method of manufacture of a heat exchanger as claimed in claim 11 the method comprising:
providing an external frame (28) as claimed in any of claims 1 to 10 and
inserting the heat exchanger core (10) into the external frame (28).

13. A method as claimed in claim 12 wherein the structure of the heat exchanger is fully completed by the step of insertion of the heat exchanger core (10) into the external frame (28) and optionally wherein the external frame (28) is provided with appropriate housings or mounting points for heat exchanger components such as valves and/or sensors.

## Patentansprüche

1. Außenrahmen für einen Wärmetauscher, wobei der Außenrahmen zum Halten eines Wärmetauscherkerns (10) vorgesehen ist; wobei der Außenrahmen Folgendes beinhaltet:
Einlass- und Auslasskupplungen (47) zum Verbinden mit einem ersten Fluidkreislauf zum Zuführen und Rückführen eines ersten Fluids zu dem Wärmetauscherkern (10);
einen ersten Behälter (36) für eine Fluidkommunikation mit einem ersten Ende des Wärmetauscherkerns;
einen zweiten Behälter (38) für eine Fluidkommunikation mit einem zweiten Ende des Wärmetauscherkerns; und
eine Galerie (44), die sich entlang des Außenrahmens zwischen dem ersten Behälter und dem zweiten Behälter erstreckt und eine Fluidkommunikation zwischen dem ersten Behälter und dem zweiten Behälter bereitstellt;
wobei der Außenrahmen dazu angeordnet ist, mit dem Wärmetauscherkern versiegelt zu sein, sodass das erste Fluid von dem Einlass durch den Wärmetauscherkern und die Behälter und zu dem Auslass strömt;
**dadurch gekennzeichnet, dass** der Außenrahmen eine einzelne, integrierte Struktur ist;
wobei sich der erste Behälter an einem ersten Ende des Außenrahmens befindet;
wobei sich der zweite Behälter an einem zweiten Ende des Außenrahmens befindet; und
wobei der Außenrahmen eine gebogene Form aufweist und dazu angeordnet ist, einen gebogenen Wärmetauscherkern zu halten.

2. Außenrahmen nach Anspruch 1, wobei der Außenrahmen dazu angeordnet ist, eine Stützstruktur für das Halten des Wärmetauscherkerns (10) durch Umschließen des Wärmetauscherkerns bereitzustellen.

3. Außenrahmen nach Anspruch 1 oder 2, der eine obere Einfassung (40), die integral als ein Teil des Außenrahmens gebildet ist und dem Abdichten entlang einer oberen Fläche des Wärmetauscherkerns (10) dient, und/oder eine untere Einfassung (42) umfasst, die integral als ein Teil des Außenrahmens gebildet ist und dem Abdichten entlang einer unteren Fläche des Wärmetauscherkerns (10) dient.

4. Außenrahmen nach Anspruch 3, der eine untere Einfassung (42) umfasst, die integral als ein Teil des Außenrahmens gebildet ist und dem Abdichten entlang einer unteren Fläche des Wärmetauscherkerns (10) dient und wobei die Galerie (44) mit der unteren Einfassung (42) integriert ist.

5. Außenrahmen nach einem der vorhergehenden Ansprüche, wobei der Außenrahmen Dichtungsflächen zum Bilden einer Dichtung mit dem Wärmetauscherkern (10) beinhaltet, um Fluidströmungswege des Wärmetauscherkerns abzudichten.

6. Außenrahmen nach einem der vorhergehenden Ansprüche, wobei der Außenrahmen so angeordnet ist, dass der Wärmetauscherkern (10) über mechanische Mittel an den Außenrahmen gekoppelt werden kann.

7. Außenrahmen nach einem der vorhergehenden Ansprüche, wobei der Außenrahmen alle Teile beinhaltet, die benötigt werden, um die Struktur des Wärmetauschers zu vervollständigen, sobald der Wärmetauscherkern (10) eingeführt wurde.

8. Außenrahmen nach einem der vorhergehenden Ansprüche, wobei der Außenrahmen mit angemessenen Gehäusen oder Befestigungspunkten für die Komponenten des Wärmetauschers bereitgestellt ist, wie zum Beispiel Ventile und/oder Sensoren.

9. Außenrahmen nach einem der vorhergehenden Ansprüche, wobei der Außenrahmen durch additive Fertigung gebildet ist.

10. Außenrahmen nach einem der vorhergehenden Ansprüche, wobei der Außenrahmen Strömungsführungsabschnitte zum Zusammenfügen von Segmenten (12) eines Wärmetauscherkerns (10) mit mehreren Segmenten beinhaltet, sodass der Wärmetauscher durch Einführen mehrerer solcher Segmente zusammengefügt werden kann.

11. Wärmetauscher, der einen Außenrahmen nach einem der vorhergehenden Ansprüche und einen Wärmetauscherkern (10) umfasst, der in den Außenrahmen eingebaut ist, wobei der Wärmetauscher ein gebogener Wärmetauscher für einen Lufteinlass eines Luftfahrzeugs ist.

12. Verfahren zum Herstellen eines Wärmetauschers nach Anspruch 11, wobei das Verfahren Folgendes umfasst:
Bereitstellen eines Außenrahmens (28) nach einem der Ansprüche 1 bis 10; und
Einführen des Wärmetauscherkerns (10) in den Außenrahmen (28) .

13. Verfahren nach Anspruch 12, wobei die Struktur des Wärmetauschers mit dem Schritt des Einführens des Wärmetauscherkerns (10) in den Außenrahmen (28) vollständig abgeschlossen ist und wobei der Außenrahmen (28) wahlweise mit angemessenen Gehäusen oder Befestigungspunkten für die Komponenten des Wärmetauschers bereitgestellt ist, wie zum Beispiel Ventile und/oder Sensoren.

## Revendications

1. Cadre externe pour un échangeur de chaleur, le cadre externe étant destiné à maintenir un noyau d'échangeur de chaleur (10) ; le cadre externe comprenant :
des raccords d'entrée et de sortie (47) pour un raccordement à un premier circuit de fluide pour l'alimentation et le renvoi d'un premier fluide vers le noyau d'échangeur de chaleur (10) ;
un premier réservoir (36) pour une communication fluidique avec une première extrémité du noyau d'échangeur de chaleur ;
un second réservoir (38) pour une communication fluidique avec une seconde extrémité du noyau d'échangeur de chaleur ; et
une galerie (44) s'étendant le long du cadre externe entre le premier réservoir et le second réservoir assurant une communication fluidique entre le premier réservoir et le second réservoir ;
dans lequel le cadre externe est agencé pour être scellé au noyau d'échangeur de chaleur de sorte que le premier fluide s'écoule depuis l'entrée, à travers le noyau d'échangeur de chaleur et les réservoirs, et vers la sortie ;
**caractérisé en ce que** le cadre externe est une structure intégrée unique ;
le premier réservoir se trouve à une première extrémité du cadre externe ;
le second réservoir se trouve à une seconde extrémité du cadre externe ; et
le cadre externe a une forme incurvée et est agencé pour maintenir un noyau d'échangeur de chaleur incurvé.

2. Cadre externe selon la revendication 1, dans lequel le cadre externe est agencé pour fournir une structure de support pour maintenir le noyau d'échangeur de chaleur (10) en encerclant le noyau d'échangeur de chaleur.

3. Cadre externe selon la revendication 1 ou 2, comprenant une enceinte supérieure (40) formée d'un seul tenant comme une partie du cadre externe et destinée à assurer l'étanchéité le long d'une surface supérieure du noyau d'échangeur de chaleur (10) et/ou une enceinte inférieure (42) formée d'un seul tenant comme une partie du cadre externe et destinée à assurer l'étanchéité le long d'une surface inférieure du noyau d'échangeur de chaleur (10).

4. Cadre externe selon la revendication 3, comprenant une enceinte inférieure (42) formée d'un seul tenant comme une partie du cadre externe et destinée à assurer l'étanchéité le long d'une surface inférieure du noyau d'échangeur de chaleur (10) et dans lequel la galerie (44) est intégrée à l'enceinte inférieure (42).

5. Cadre externe selon une quelconque revendication précédente, dans lequel le cadre externe comporte des surfaces d'étanchéité pour former un joint avec le noyau d'échangeur de chaleur (10) afin de sceller les trajets d'écoulement de fluide du noyau d'échangeur de chaleur.

6. Cadre externe selon une quelconque revendication précédente, dans lequel le cadre externe est agencé de sorte que le noyau d'échangeur de chaleur (10) peut être couplé au cadre externe par l'intermédiaire de moyens mécaniques.

7. Cadre externe selon une quelconque revendication précédente, dans lequel le cadre externe comporte toutes les pièces nécessaires pour achever la structure de l'échangeur de chaleur une fois que le noyau d'échangeur de chaleur (10) a été inséré.

8. Cadre externe selon une quelconque revendication précédente, dans lequel le cadre externe est pourvu de boîtiers ou de points de montage appropriés pour des composants d'échangeur de chaleur tels que des vannes et/ou des capteurs.

9. Cadre externe selon une quelconque revendication précédente, dans lequel le cadre externe est formé à l'aide de la fabrication additive.

10. Cadre externe selon une quelconque revendication précédente, dans lequel le cadre externe comporte des sections de guide d'écoulement pour joindre des segments (12) d'un noyau d'échangeur de chaleur à segments multiples (10) de sorte que l'échangeur de chaleur peut être assemblé en insérant plusieurs de ces segments.

11. Échangeur de chaleur comprenant un cadre externe selon une quelconque revendication précédente et un noyau d'échangeur de chaleur (10) monté à l'intérieur du cadre externe, dans lequel l'échangeur de chaleur est un échangeur de chaleur incurvé pour une entrée d'air d'un aéronef.

12. Procédé de fabrication d'un échangeur de chaleur selon la revendication 11, le procédé comprenant :
la fourniture d'un cadre externe (28) selon l'une quelconque des revendications 1 à 10 et l'insertion du noyau d'échangeur de chaleur (10) dans le cadre externe (28).

13. Procédé selon la revendication 12, dans lequel la structure de l'échangeur de chaleur est entièrement achevée par l'étape d'insertion du noyau d'échangeur de chaleur (10) dans le cadre externe (28) et éventuellement dans lequel le cadre externe (28) est pourvu de boîtiers ou points de montage appropriés pour les composants d'échangeur de chaleur tels que les vannes et/ou les capteurs.
